**Europäisches Patentamt**

**European Patent Office**

**Office européen des brevets**

(19)

(11) Veröffentlichungsnummer: **0 228 361**
**A2**

(12) # EUROPÄISCHE PATENTANMELDUNG

(21) Anmeldenummer: **86890342.8**

(22) Anmeldetag: **17.12.86**

(51) Int. Cl.⁴: **H 01 M 2/40, H 01 M 10/42**

(30) Priorität: **03.01.86 AT 7/86**

(43) Veröffentlichungstag der Anmeldung: **08.07.87**
**Patentblatt 87/28**

(84) Benannte Vertragsstaaten: **AT BE CH DE ES FR GB GR IT LI LU NL SE**

(71) Anmelder: **S.E.A. Studiengesellschaft für Energiespeicher und Antriebssysteme Gesellschaft m.b.H., Bleckmanngasse 10 Postfach 49, A-8680 Mürzzuschlag (AT)**

(72) Erfinder: **Tomazic, Gerd, Dipl.-Ing. Dr., Hofkirchergasse 4, A-8680 Mürzzuschlag (AT)**

(74) Vertreter: **Widtmann, Georg, Dr., S.E.A. Studiengesellschaft für Energiespeicher und Antriebssysteme Gesellschaft m.b.H. Schellinggasse 7/5, A-1010 Wien (AT)**

(54) **Galvanisches Element und Verfahren zur Speicherung und Abgabe von elektrischer Energie.**

(57) Galvanisches Element und Verfahren zur Speicherung und Abgabe von elektrischer Energie mit Pumpeinrichtung für umlaufenden Elektrolyten einer Vielzahl von, vorzugsweise bipolaren, insbesondere kunststoffgebundenen Kohlenstoff aufweisenden, Elektroden, einer Vielzahl von Separatoren, wobei gegebenenfalls die Separatoren und/oder Elektroden zumindest im Bereich ihrer äußeren Ränder miteinander flüssigkeitsdicht verbunden sind, wodurch Anoden- und Kathodenräume gebildet sind, die jeweils untereinander über einzelne Verbindungsleitungen für die Elektrolyt zu- und -ableitungen zu bzw. aus den Anoden- bzw. Kathodenräumen, verbunden sind, die jeweils zumindest in eine Sammelleitung, die mit einem Elektrolytvorratsbehälter verbunden ist, münden, und die einzelnen Verbindungsleitungen für die Elektrolytab- bzw. -zuleitung zu den Anoden- und den Kathodenräumen zusätzlich miteinander über einen elektrischen Leiter, insbesondere über einen Leiter zweiter Ordnung, z.B. Verbindungskanal mit sich änderndem Querschnitt verbunden sind, wobei der elektrische Leiter mit einer elektrischen Spannungsquelle, vorzugsweise dem galvanischen Element, verbunden ist, wobei die Stromversorgung des elektrischen Leiters, welcher die einzelnen Verbindungsleitungen für den Elektrolyten elektrisch leitend verbindet, ein- und ausschaltbar ist, insbesondere, daß ein Schalter zwischen der elektrischen Spannungsquelle und dem elektrischen Leiter vorgesehen ist.

Galvanisches Element und Verfahren zur
Speicherung und Abgabe von elektrischer
Energie

Die Erfindung bezieht sich auf ein galvanisches Element, insbesondere Sekundärelement, z.B. wiederaufladbares Zink-Brom-Element mit umlaufenden Elektrolyten und auf ein Verfahren zur Speicherung und Abgabe von elektrischer Energie.

Umlaufende Elektrolyten weisen den Vorteil auf, daß ein Teil der elektrochemischen Speicherung, beispielsweise Speicherung des elementaren Broms nicht in der Zelle durchgeführt werden muß, sondern daß die Speicherung desselben im Reservoir erfolgen kann. Dadurch kann das Volumen der Elektrodenräume geringer gehalten werden, wodurch Verluste der Zelle aufgrund erhöhten elektrischen Widerstandes reduzierbar sind. Ein umlaufender Elektrolyt weist jedoch den Nachteil auf, daß die Leitungen, beispielsweise alle Zuleitungen zum Anodenraum untereinander verbunden sind. Durch diese Verbindung über den Elektrolyten, welcher ein elektrischer Leiter zweiter Klasse ist, treten Ströme auf, die zu einem unerwünschten Wachstum von Kristallen, d.h. Dendriten führt. Dieses Dendritenwachstum bedingt nicht nur einen Stromverlust, sondern kann auch zu einer Zerstörung der Struktur des galvanischen Elementes führen. Weiters kann beispielsweise ein Dendrit in einen Einlaß- bzw. Auslaßkanal aus einer Zelle hineinwachsen und damit diesen verschließen, sodaß diese Zelle nicht mehr geladen bzw. entladen werden kann. Um die Auswirkung dieser parasitären Ströme zu vermeiden, wurden verschiedene Schaltungen, z.B. aus der US-Patentschrift Nr. 3.666.561 bekannt. Dabei ist im Bereich der Elektrolytkanäle ein Quertunnel mit zwei Endelektroden (Schutzelektroden) durch das Zellenpaket vorgesehen und an die Elektroden wird das Potential des Zellenpaketes angelegt. Infolge der Potential-Gleichheit fließt im Bereich zwischen der aktiven Elektrode und dem Quertunnel kein Strom, womit auch das Dendritenwachstum entlang der Kanäle unterbunden wird.

Das an die Schutzelektroden angelegte Potential würde jedoch auf der Kathoden-Seite Dendritenwachstum ergeben, was man durch Beaufschlagen dieser Schutzelektrode mit kleinen Strommengen unterbindet.

Diese Schaltungen weisen jedoch den Nachteil auf, daß sie nur bei umgepumpten Elektrolyt funktionieren, daß sie somit Energie für die Pumpen aufwenden und daß die parasitären Ströme durch die Schaltung nicht vermieden werden. Das Abschalten der Pumpe würde auf Grund der z. B. Bromverarmung an den Schutzelektroden zu Dendritenwachstum an diesen führen.

Die Erfindung hat zur Aufgabe, ein galvanisches Element zu schaffen, das einerseits die elektrochemischen Nachteile des umlaufenden Elektrolyten sicher vermeidet, und andererseits auch bei Stillstand der Umwälzeinrichtungen unnötigen Stromverbrauch und Kurzschluß durch Dendritenwachstum u. dgl. sicher vermeidet.

Das erfindungsgemäße galvanische Element, insbesondere Sekundärelement, z.B. wiederaufladbares Zink/Brom-Element mit Pumpeinrichtung mit umlaufenden Elektrolyten, einer Vielzahl von, vorzugsweise bipolaren, insbesondere kunststoffgebundenen Kohlenstoff aufweisenden, Elektroden, einer Vielzahl von Separatoren, wobei gegebenenfalls die Separatoren und/oder die Elektroden zumindest im Bereich ihrer äußeren Ränder miteinander flüssigkeitsdicht verbunden sind, wodurch Anoden- und Kathodenräume gebildet sind, die jeweils untereinander über einzelne Verbindungsleitungen für die Elektrolytzu- und -ableitung, zu bzw. aus den Anoden- bzw. Kathodenräumen verbunden sind, die jeweils zumindest in eine Sammelleitung, die mit einem Elektrolytvorratsbehälter verbunden sind, münden, und zumindest teilweise die einzelnen Verbindungsleitungen für die Elektrolytzuleitung und Ableitungen zu den Kathoden- und Anodenräumen zusätzlich miteinander über zumindest einen elektrischen Leiter, insbesondere über einen elektrischen Leiter zweiter Ordnung, z.B. Verbindungskanal mit sich änderndem Querschnitt und darin befindlichem Elektrolyten, verbunden sind, wobei der elektrische Leiter mit einer elektrischen Spannungsquelle, vorzugsweise dem galvanischen Element verbunden ist, besteht im wesentlichen darin, daß die Stromversorgung des elektrischen Leiters, welcher die einzelnen Verbindungsleitungen für den Elektrolyten elektrisch leitend verbindet, ein- und ausschaltbar ist, insbesondere daß ein Schalter zwischen der elektrischen Spannungsquelle und dem elektrischen Leiter vorgesehen ist. Durch diese durchaus mehr als einfache Maßnahme kann den Strömen, welche zu einem unerwünschten Dendritenwachstum sowohl während der Aufladungs- als auch während der Entladungsphase sowohl im Stillstand als auch bei umlaufenden Elektrolyten besonders vorteilhaft Rechnung getragen werden. Es war für den Fachmann durchaus nicht naheliegend, daß den an sich langsamen Spannungsänderungen während des gesamten Vorganges alleine dadurch Rechnung getragen werden kann, daß die Hilfsströme, welche zur Kompensation dienen, einfach ab- und zugeschaltet werden.

Ist die Stromversorgung des/der elektrischen Leiter(s) simultan, gegebenenfalls zeitlich verschoben mit der Stromversorgung der Pumpeinrichtung für den Elektrolyten steuerbar, so ist eine besonders einfache und auch funktionssichere Schaltung gegeben.

Sind zwischen Sammelleitung und Elektrodenraum Absperrorgane der einzelnen Verbindungsleitungen vorgesehen, so kann auf besondere sichere Art und Weise auch ein Stromfluß zwischen den einzelnen Elektrodenräumen sicher vermieden werden, wobei bei Abschaltung des Schutzstromes dem elektrischen Leiter auch ein Dendritenwachstum in den einzelnen Elektrodenräumen und damit Zerstörung dieser, Stromverluste und dgl. sicher vermieden sind.

Ist jeweils ein gemeinsames Absperrorgan vorgesehen, so kann eine besonders einfache und rasche sowie zeitlich simultan erfolgende Betätigung erreicht werden.

Wird das Absperrorgan durch ein fluidbetätigbares Membranventil gebildet, so kann eine besonders einfache Betätigung erfolgen, wobei ein besonders geringer Platzbedarf für die Absperrung erforderlich wird und gleichzeitig durch einen vorgesehenen Druck des Fluides mit dem die Membran bewegt wird, ein maximaler Druck in den Elektrolyträumen eingestellt wird, sodaß eine Zerstörung der Systeme durch Überdruck sicher vermeidbar ist.

Wird das Absperrorgan durch einen Hahn gebildet, dessen Küken einen in Achsrichtung erstreckenden Kanal aufweist, welcher als Leiter dient, an dessen Enden jeweils die Elektroden angeordnet sind, so ist ein Absperrorgan gebildet, welches gleichzeitig als elektrischer Leiter für die Schutzstromsteuerung dienen kann.

Weisen die Zu- und/oder Ableitungen in ihrem Verlauf ein Maximum, das vorzugsweise über den Anoden- und/oder Kathodenräumen liegt auf, in das eine Belüftungsleitung, die vorzugsweise ein Rückschlagsventil für den Elektrolyten aufweist, mündet, die gegebenenfalls mit dem Gasraum des Vorratsgefäßes für den Elektrolyten verbunden ist, so kann eine Absperrung der Zu- und Ableitungen durch diese Luftblasen erfolgen, sodaß keine Ströme in den Zu- und Ableitungen fließen können. Eine derartige Ausführungsform ist besonders bei Elektroden- und Separatorenpaketen geeignet, die nicht normal sondern parallel zur Horizontalen angeordnet sind.

Lediglich durch Abschalten des Elektrolytkreislaufes wird Gas oder Luft angesaugt, das sodann im Maximum verbleibt. Soll sodann wieder Strom gespeichert werden bzw. Strom entnommen werden, wird der Elektrolyt in Umlauf gesetzt, wodurch gleichzeitig eine Ableitung der Gase aus dem jeweiligen Maximum erfolgt.

Die Maxima können auch durch den elektrischen Leiter und zwar durch den Verbindungskanal verbunden sein bzw. gebildet werden. Damit ist gewährleistet, daß die Stromzufuhr zum Leiter ohne zusätzlichen Schalter oder dgl. alleine durch die Belüftung unterbrochen wird.

Das erfindungsgemäße Verfahren zur Speicherung und Abgabe von elektrischer Energie eines galvanischen Elementes, wobei sowohl während der Speicherung als auch während der Abgabe Elektrolyt im Kreislauf zwischen ein oder mehreren Vorratsgefäßen und den zueinander strömungsmäßig parallel geschalteten Anoden- und Kathodenräumen strömt wobei die einzelnen Verbindungsleitungen für die Elektrolytzu- bzw. -ableitungen über zumindest einen elektrischen Leiter verbunden sind, welcher zumindest bei der Abgabe von elektrischer Energie mit einer elektrischen Spannung, insbesondere der des galvanischen Elementes beaufschlagt wird, besteht im wesentlichen darin, daß bei Unterbrechung der zusätzlichen Speicherung, insbesondere bei Unterbrechung der Abgabe von elektrischer Energie die Spannungsbeaufschlagung des elektrischen Leiters unterbrochen wird, und vorzugsweise im wesentlichen gleichzeitig der Umlauf des Elektrolyten unterbrochen wird, wobei insbesondere die einzelnen Elektrolytzu- bzw. Ableitungen abgeschlossen werden.

Werden bei der Speicherung und/oder Abgabe von elektrischer Energie die Zu- und/oder Ableitungen belüftet, so erfolgt eine besonders einfache Absperrung der Leitungen, wobei eine sichere Unterbindung der elektrischen Leitfähigkeit erreicht wird und keine aufwendigen zusätzlichen Vorrichtungen, wie Absperrorgane oder dgl.,erforderlich sind.

Wird bei der Unterbrechung der Speicherung und/oder Abgabe von elektrischer Energie der elektrische Leiter und zwar der Verbindungskanal belüftet, so kann ohne zusätzlichen Schalter die Stromzufuhr zu dem elektrischen Leiter auf völlig überraschend einfache Art und Weise unterbrochen werden.

Im folgenden wird die Erfindung anhand der Zeichnungen näher erläutert:

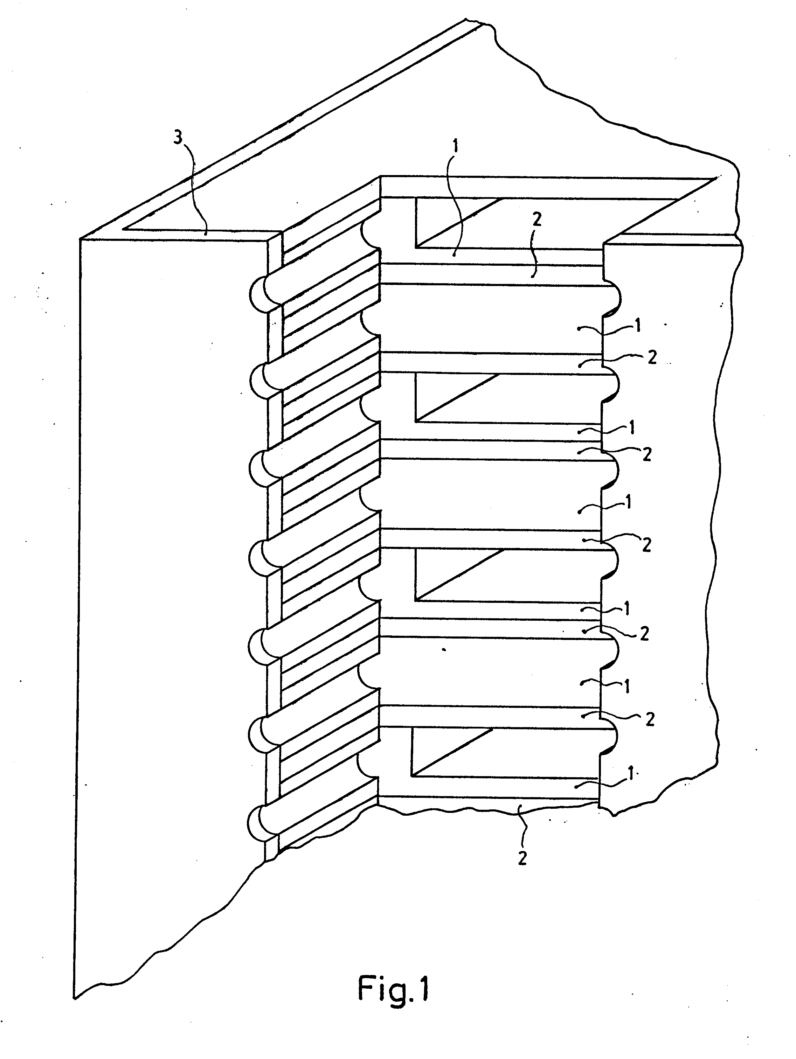

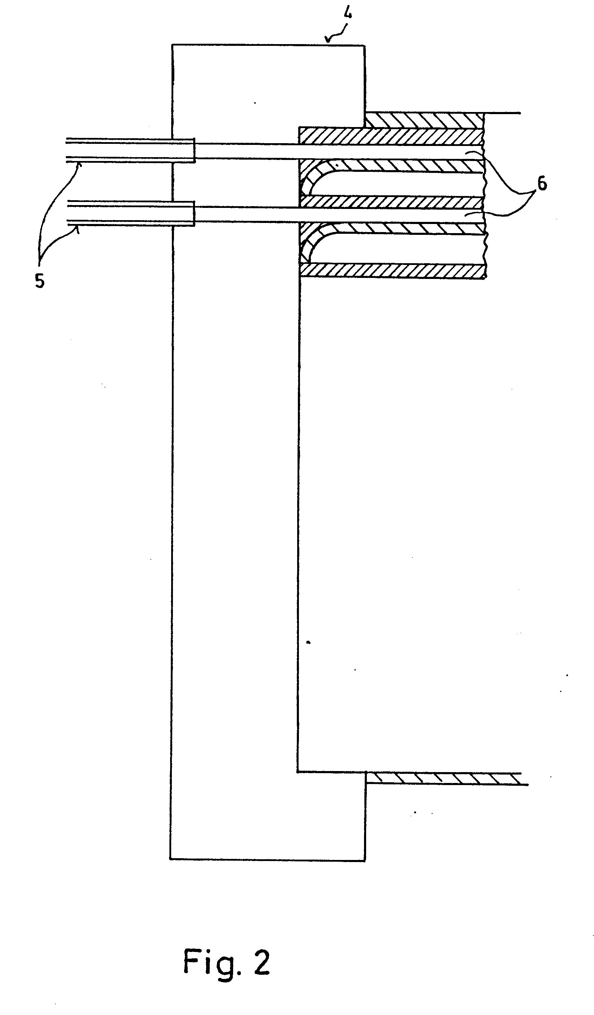

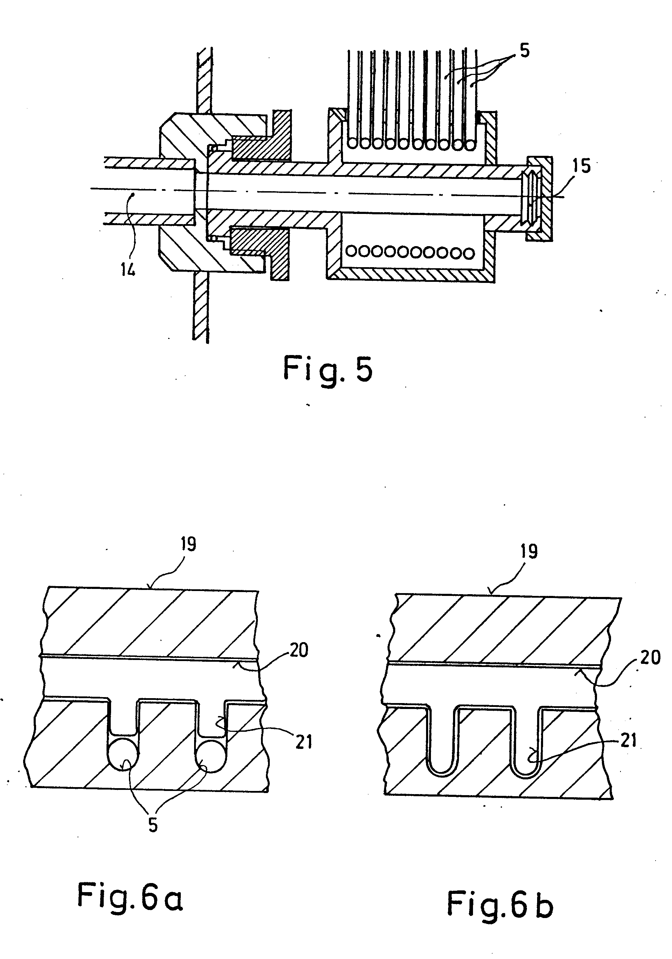

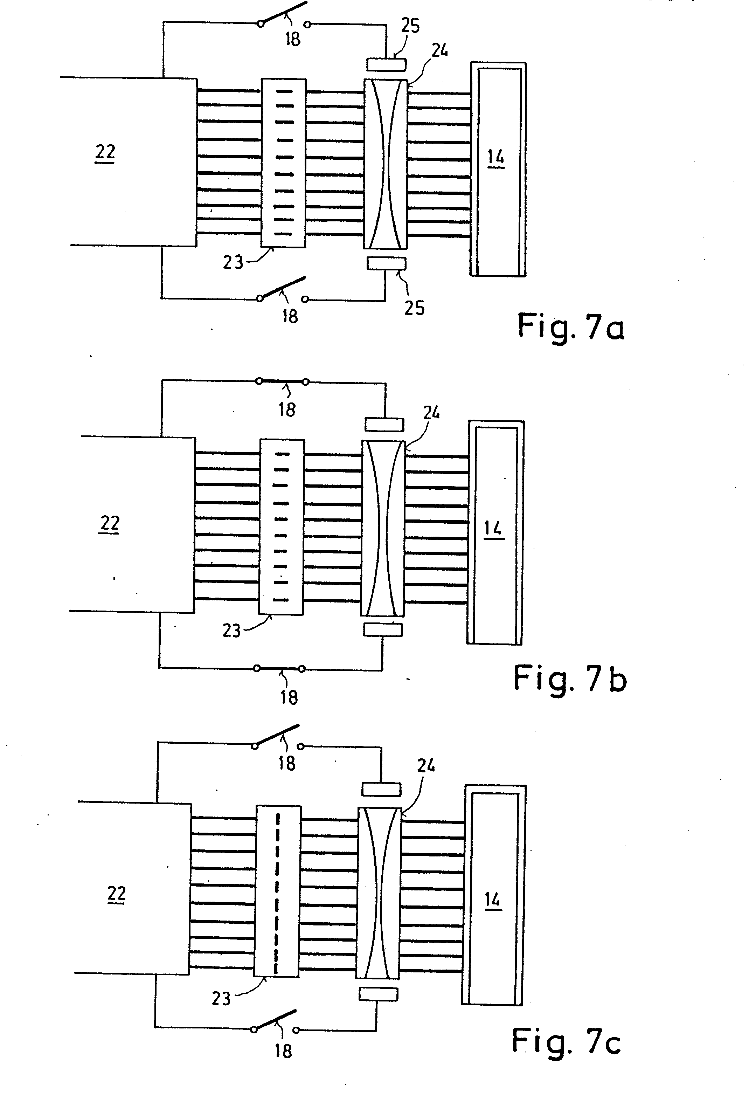

Es zeigen Fig.1 den Ausschnitt aus einem wiederaufladbaren Zink/Brom-Element, Fig. 2 den Anschluß der Verbindungsleitungen an das Element gemäß Fig. 1, Fig. 3 und 4 verschiedene Mehrfachabsperrorgane, Fig. 5 eine Sammelleitung, Fig. 6 die Einmündung der Verbindungsleitungen in eine Sammelleitung und Fig. 7 drei verschiedene Betriebszustände des galvanischen Elements in schematischer Darstellung.

Das wiederaufladbare Zink/Brom-Element besteht aus einer Vielzahl aneinander angeordneter Separaotren 1 und Elektroden 2, die an ihrem Randbereich 3 miteinander flüssigkeitsdicht verbunden sind. Durch die aneinandergereihten Separatoren und Elektroden werden Anoden- und Kathodenräume gebildet, wobei dieselben durch die bipolaren Elektroden 2 getrennt sind. Diese Elektroden sind beispielsweise aus mit Kohlenstoff gefülltem Polypropylen aufgebaut. Jeder Anoden- und Kathodenraum weist einzelne Verbindungsleitungen und zwar jeweils zumindest eine Zu- und Ableitung für den Elektrolyten auf und ist über eine Sammelleitung mit einem Elektrolytbehälter über eine Pumpe verbunden.

Wie aus Fig. 2 ersichtlich, kann über einen Zuleitungsblock 4, der an die Ausnehmung gemäß Fig. 1 eingeschoben ist, die Verbindung der einzelnen Zu- bzw. Ableitungen 5 erfolgen, wobei diese Zu- und Ableitungen in den jeweiligen Anoden- bzw. Kathodenraum 6 münden. Diese Blöcke 4 dienen jeweils als Aufnahme für sämtliche Zu- bzw. Ableitungen aus dem Kathoden- bzw. Anodenraum. In Fig. 2 sind lediglich zwei Leitungen aus Übersichtsgründen dargestellt, wobei die Anzahl der Leitungen sich nach der Anzahl der Anoden- bzw. Kathodenräume richtet. Wie aus Fig. 1 und Fig. 2 ersichtlich, sind die Kathoden- und Anodenräume über die bipolaren Elektroden 2 benachbart; jedoch werden die einzelnen Zuleitungsblöcke jeweils nur die einander nicht benachbarten Räume, z. B. Anodenräume, anspeisen.

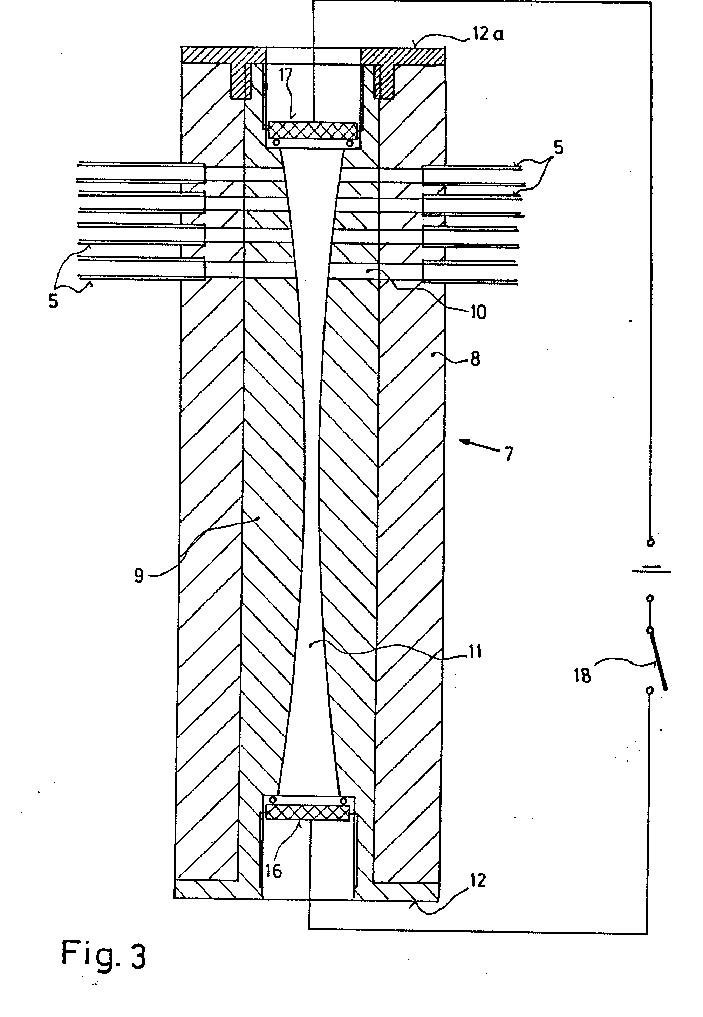

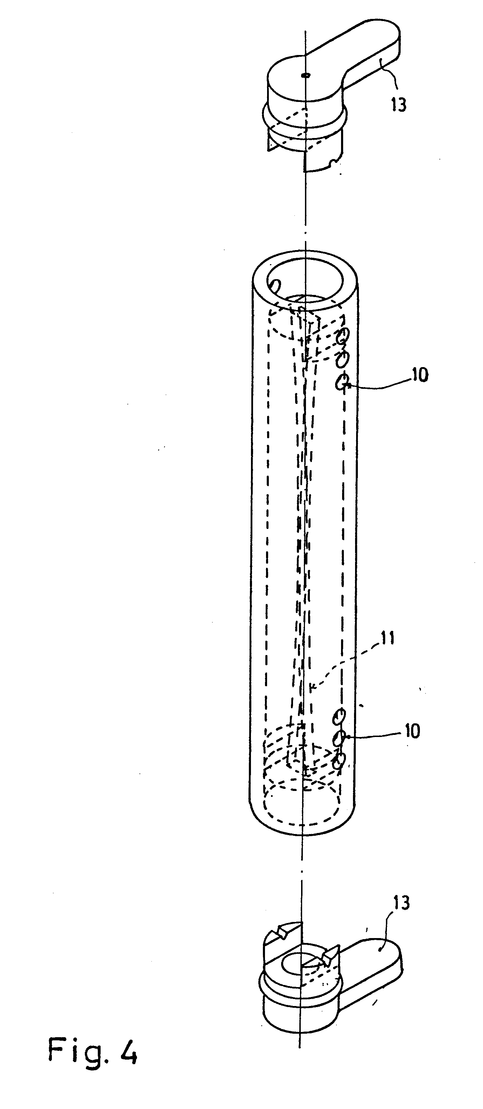

Die Leitungen 11 münden sodann in ein gemeinsames Absperrorgan 7, wie aus Fig. 3 ersichtlich, als Hahn ausgebildet sein kann das ein Gehäuse 8 aufweist, in das die einzelnen Leitungen münden, bzw. aus welchem sie wieder austreten. Im Gehäuse 8 ist ein Küken 9 angeordnet, das durch das Küken quer hindurchführende Kanäle 10 aufweist, die durch Drehen des Kükens einen Flüssigkeitsdurchtritt durch die Leitungen 5 durch das Gehäuse hindurch erlauben. Bei Geöffnetstellung, wie in Fig. 3 dargestellt, sind die einzelnen Flüssigkeitsleitungen weiters über die Ausnehmung 11 verbunden, wobei der elektrische Widerstand des Leiters der durch die mit Elektrolyt gefüllte Ausnehmung gebildet ist, durch sich verkleinernden bzw. wieder vergrößernden Querschnitt geändert ist, wodurch Kurzschlußströme ungleicher Störke ausgeglichen werden. An beiden Enden des elektrischen Leiters sind Elektroden 16 und 17 angeordnet, die mit den Endpolen über Schalter 18 verbunden sind. Das Küken weist auf einer Seite einen Fortsatz 12 auf, mit dem sich dasselbe im Gehäuse 8 abstützt, wohingegen auf der anderen Seite eine ringförmige Scheibe 12a in dasselbe geschraubt ist, wodurch das Küken vom Herausfallen aus dem Gehäuse gesichert ist. Fig. 4 zeigt eine komplette Ansicht eines weiteren Absperrorganes mit integriertem Nebenschlußstrom-Ausgleich (Shunt-Strom-Ausgleich). Die Anschlüsse für die Leitungen 5 sind deutlich zu sehen, wobei die Mündungen 10 für die Leitungen 5 besonders deutlich ersichtlich sind. Die Ausnehmung 11 weist einen rechteckigen Querschnitt auf. Die Bedienungshebel 13 können in das Küken eingführt werden, sodaß ein Verschwenken des Küken besonders leicht ermöglicht ist. Es kann jedoch auch ein Küken ohne Ausnehmung verwendet werden.

In Fig. 5 ist eine Sammelleitung 14 dargestellt, in welche die einzelnen Verbindungsleitungen, die Zu- bzw. Ableitungen 5 münden. Am Ende der Sammelleitung 14 kann ein druckempfindlicher Schalter 15 angebracht sein, der z.B. bei Druckanstieg, also Funktion der Pumpen den Schalter 18 für den Kurzschlußstrom-Ausgleich betätigt. Diese Betätigung kann über einen eigenen Schalter und Zeitverzögerer, z.B. Kondensator erfolgen.

Bei den in Fig. 6 dargestellten Mehrfachventilen führen die Leitungen durch ein Absperrorgan 19, wobei das Absperrorgan eine zylindrische Membran 20 mit fingerartigen Fortsätzen 21 aufweist. Sollen nun die Leitungen 5 verschlossen werden, so wird die Membran 20 mit Druck beaufschlagt, sodaß die fingerförmigen Fortsätze 21 aus der Stellung wie in Fig. 6a dargestellt, expandiert werden, und wie in Fig. 6b dargestellt, in den freien Querschnitt der Leitungen treten, daß jeglicher weiterer Durchfluß vermieden ist.

In Fig. 7a, 7b und 7c sind die Anlaufphase, die Betriebsphase und die Ruhephase, bezogen auf Schutzstromzufuhr und Stellung des Absperrorganes dargestellt. Zwischen dem galvanischen Element 22 und der Sammelleitung 14 ist ein Mehrfachabsperrorgan 23 und ein elektrischer Leiter 24 für den Stromausgleich mit Elektroden 25, die über Leitungen und Schalter 18 mit den Polen des galvanischen Elementes verbunden sind , angeordnet. Bei der in Fig. 7a dargestellten Anlaufphase ist das Absperrorgan geöffnet, sodaß der Elektrolyt über die Sammelleitung 14 und die Verbindungsleitungen in die Elektrodenräume und aus diesen gelangen kann. Die Schalter 18 sind geöffnet, sodaß kein Strom an den Elektroden anliegt. Nach der Anlaufphase werden, wie in Fig. 7b dargestellt, die Schalter 18 geschlossen, sodaß die Ausgleichströme fließen können. Soll nun das galvanische Element über längere Zeit außer Funktion gesetzt werden, so wird das Absperrorgan gemäß 7c geschlossen und auch die Schalter 18 geöffnet, sodaß kein Strom an den Elektroden anliegt und zu einem Verlust führen kann.

Die Zu- und Ableitungen 5 können so geführt werden, daß sie ein Maximum aufweisen, also z. B. eine Schleife aufweisen, die oberhalb der Elektrolyträume liegt. Die Elektrolyträume und damit die Elektroden und Separatoren können parallel zu Horizontalen angeordenet werden, sodaß gleichlange Zu- und Ableitungen und zwar sowohl für die Kathoden- als auch für die Anodenräume möglich sind. Am Ort des Maximums kann eine Leitung münden, die ein Rückschlagventil aufweist, welches verhindert, daß Elektrolytflüssigkeit, welche umgepumpt wird, in die Belüftungsleitung gelangt. Diese Belüftungsleitung kann ihrerseits in den Gasraum des Elektrolytvorratsbehälters münden. Der Ort der Maxima kann gleichzeitig durch einen Elektrolytverbindungskanal gebildet werden, welcher in diesem Falle dann in seiner Gesamtheit belüftet wird. Durch diese Belüftung erfolgt somit auch eine Unterbrechung der Stromzufuhr zu dem elektrischen Leiter. Die Betriebsweise eines derartigen galvanischen Elementes ist nun die, daß sowohl bei der Speicherung als auch bei der Abgabe von elektrischer Energie jeweils der Elektrolyt im Umlauf gehalten wird. Wird nun die Speicherung bzw. die Entnahme von elektrischer Energie gestoppt, so kommt es ebenfalls zum Stillstand der Zirkulation des Elektrolyten, womit

0228361

das Rückschlagventil öffnet und eine Belüftung erfolgt,
wodurch die Zu- und/oder Ableitungen durch das Belüftungsgas de facto abgesperrt werden, wobei weiters eine elektrische Leitung ebenfalls wirksam vermieden wird.

Patentansprüche :

1. Galvanisches Element, insbesondere Sekundärelement, z.B. wiederaufladbares Zink/Brom-Element, mit Pumpeinrichtung für umlaufenden Elektrolyten, einer Vielzahl von, vorzugsweise bipolaren, insbesondere kunststoffgebundenen Kohlenstoff aufweisenden, Elektroden, einer Vielzahl von Separatoren, wobei gegebenenfalls die Separatoren und/oder Elektroden zumindest im Bereich ihrer äußeren Ränder miteinander flüssigkeitsdicht verbunden sind, wodurch Anoden- und Kathodenräume gebildet sind, die jeweils untereinander über einzelne Verbindungsleitungen für die Elektrolytzu- und ableitungen zu bzw. aus den Anoden- bzw. Kathodenräumen, verbunden sind, die jeweils zumindest in eine Sammelleitung, die mit einem Elektrolytvorratsbehälter verbunden ist, münden, und die einzelnen Verbindungsleitungen für die Elektrolytab- bzw. -zuleitung zu den Anoden- und den Kathodenräumen zusätzlich miteinander über einen elektrischen Leiter, insbesondere über einen Leiter zweiter Ordnung, z.B. Verbindungskanal mit sich änderndem Querschnitt verbunden sind, wobei der elektrische Leiter mit einer elektrischen Spannungsquelle, vorzugsweise dem galvanischen Element, verbunden ist, dadurch gekennzeichnet, daß die Stromversorgung des elektrischen Leiters, welcher die einzelnen Verbindungsleitungen für den Elektrolyten elektrisch leitend verbindet, ein- und ausschaltbar ist, insbesondere, daß ein Schalter zwischen der elektrischen Spannungsquelle und dem elektrischen Leiter vorgesehen ist.

2. Galvanisches Element nach Anspruch 1, dadurch gekennzeichnet, daß die Stromversorgung des/der elektrischen Leiter(s) simultan, gegebenenfalls zeitlich verschoben, mit der Stromversorgung der Pumpeinrichtung steuerbar ist.

3. Galvanisches Element nach Anspruch 1 oder 2, dadurch gekennzeichnet, daß zwischen Sammelleitung und Elektrodenraum Absperrorgane für die Verbindungsleitungen vorgesehen sind.

4. Galvanisches Element nach Anspruch 1, 2 oder 3, dadurch gekennzeichnet, daß jeweils ein gemeinsames Absperrorgan vorgesehen ist.

5. Galvanisches Element nach einem der Ansprüche 1 bis 4, dadurch gekennzeichnet, daß das Absperrorgan durch ein fluidbetätigbares Membranventil gebildet ist.

6. Galvanisches Element nach Anspruch 1, 2 oder 3, dadurch gekennzeichnet, daß das Absperrorgan durch einen Hahn gebildet wird, dessen Küken einen in Achsrichtung erstreckenden Kanal aufweist, welcher als Leiter dient, an desen Enden jeweils Elektroden angeordnet sind.

7. Galvanisches Element nach einem der Ansprüche 1 bis 6, dadurch gekennzeichnet, daß die Zu- und/oder Ableitungen (5) in ihrem Verlauf ein Maximum, das vorzugsweise über den Anoden- und/oder Kathodenräumen liegt, aufweisen, in das eine Belüftungsleitung, die vorzugsweise ein Rückschlagventil für den Elektrolyten aufweist, mündet, die gegebenenfalls mit dem Gasraum des Vorratsgefäßes für den Elektrolyten verbunden ist.

8. Galvanisches Element nach Anspruch 7, dadurch gekennzeichnet, daß die Maxima durch den elektrischen Leiter und zwar durch den Verbindungskanal verbunden sind bzw. gebildet ist.

9. Verfahren zur Speicherung und Abgabe von elektrischer Energie eines galvanischen Elementes, insbesondere nach einem der Ansprüche 1 bis 8, wobei sowohl während der Speicherung als auch während der Abgabe Elektrolyt im Kreislauf zwischen einem oder mehreren Vorratsgefäßen und den zueinander strömungsmäßig parallelgeschalteten Anoden- und Kathodenräumen

strömt, wobei die einzelnen Verbindungsleitungen für die Elektrolytzu- bzw. -ableitungen über zumindest einen elektrischen Leiter verbunden werden, welcher zumindest bei der Abgabe von elektrischer Energie mit einer elektrischen Spannung, insbesondere der des galvanisches Elementes beaufschlagt wird, dadurch gekennzeichnet, daß bei Unterbrechung der Speicherung, insbesondere Unterbrechung der Abgabe von elektrischer Energie die Spannungsbeaufschlagung des elektrischen Leiters unterbrochen wird, und vorzugsweise im wesentlichen gleichzeitig der Umlauf des Elektrolyten unterbrochen wird, wobei insbesondere die einzelnen Elektrolytzu- bzw. -ableitungen abgeschlossen werden.

10. Verfahren nach Anspruch 9, dadurch gekennzeichnet, daß bei Unterbrechung der Speicherung und/oder Abgabe von elektrischer Energie die Zu- und/oder Ableitungen belüftet werden.

11. Verfahren nach Anspruch 9 oder 10, dadurch gekennzeichnet, daß bei Unterbrechung der Speicherung und/oder Abgabe von elektrischer Energie der elektrische Leiter und zwar der Verbindungskanal belüftet wird.

Fig.1

Fig. 2

0228361

Fig. 3

0228361

13

10

11

10

13

Fig. 4

Fig. 5

Fig. 6a

Fig. 6b

0228361

Fig. 7a

Fig. 7b

Fig. 7c